# NEUE EUROPÄISCHE PATENTSCHRIFT

(11) **EP 2 404 758 B2**
(45) Veröffentlichungstag und Bekanntmachung des Hinweises auf die Entscheidung über den Einspruch: **23.08.2023**
(45) Hinweis auf die Patenterteilung: 02.03.2016
(21) Anmeldenummer: 11170081.1
(22) Anmeldetag: 16.06.2011
(51) Int. Cl.: B41F 23/04, F26B 21/08, F26B 23/00

(54) **Bogenverarbeitende Maschine mit einem oder mehreren Trocknern**
Machine for processing sheets with one or more dryers
Machine de traitement de feuilles, avec un ou plusieurs séchoirs

(30) Priorität: 09.07.2010 DE 102010026604
(43) Veröffentlichungstag der Anmeldung: 11.01.2012
(73) Patentinhaber: Heidelberger Druckmaschinen AG, 69115 Heidelberg (DE)
(72) Erfinder: Jung, Jochen, 79541 Lörrach (DE); Müller, Rolf, 69226 Nußloch (DE)

(56) Entgegenhaltungen:
- EP-A1- 0 502 602
- EP-A2- 1 864 800
- WO-A1-2011/141335
- DE-A1-102004 040 131
- DE-A1-102004 048 857
- DE-A1-102008 042 122
- DE-A1-102011 075 109
- DE-C- 624 048
- US-A- 2 113 770
- US-A- 3 208 158

## Beschreibung

Die Erfindung betrifft ein Verfahren zur Trocknung von bedruckten und/oder lackierten Bögen in einer bogenverarbeitenden Maschine sowie eine bogenverarbeitende Maschine, insbesondere Bogendruckmaschine mit einem oder mehreren Trocknern, Luftzuführungseinrichtungen für die Trockner, Luftabführungseinrichtungen für die erwärmte Abluft sowie eine Mischeinrichtung für das Zumischen eines Teils der Abluft zur Trocknerzuluft.

Derartige Bogendruckmaschinen sind an sich bekannt. Mit steigenden Energiepreisen wurde es immer wichtiger, den Energieverbrauch von Druckmaschinen zu optimieren und insbesondere im Bereich des Trockners, der einen hohen Energieverbrauch im Vergleich zu den übrigen Komponenten der Maschine besitzt, Maßnahmen zur Wiederverwendungder im Trockner aufgeheizten Abluft bzw. der darin enthaltenen Wärme zu finden. So ist es beispielsweise aus der DE 10 2004 048 857 bekannt, warme Abluft aus einem Teil einer Bogenoffsetdruckmaschine mit Zuluft aus einem anderen Teil der Druckmaschine zu mischen und einem Trockner in der Druckmaschine zuzuführen. Andere Vorschläge zielen darauf ab, die Trocknerzuluft über Wärmetauscher zu erhitzen, die von Abwärme der Druckmaschine betrieben wird, darunter auch die warme Trocknerabluft. Solche Lösungen sind beispielsweise in der EP 2 047 991 A2, der DE 10 2005 042 956 A1 oder der WO 01/68223 A1 beschrieben.

Des Weiteren ist es aus der EP 1 319 506 B1 auch bekannt, bewegliche Klappen vorzusehen, mit denen die Verweildauer von Warmluft im Trockner gesteuert wird, um diesen schnell auf die optimale Betriebstemperatur zu bringen. Diese Steuerung erfolgt durch die Messung der Temperatur im Bereich des Trockners.

Die bekannten Lösungen sind teilweise mit einem sehr hohen apparativen Zusatzaufwand verbunden, insbesondere die in der vorgenannten WO 01/68223 A1 beschriebene. Dennoch ist nicht sichergestellt, dass die Trocknerabluft optimal genutzt wird.

Es ist deshalb die Aufgabe der vorliegenden Erfindung, für bogenverarbeitende Maschinen Einrichtungen vorzusehen, mit denen auf einfache und kostengünstige Weise ein signifikanter Beitrag zur Energieeffizienzsteigerung eines Trockners geleistet werden kann. Diese Aufgabe wird gemäß den Merkmalen des Patentanspruchs 1 und 10 gelöst.

Die Erfindung geht von der Erkenntnis aus, dass es nicht allein genügt Temperaturmessungen vorzunehmen, um die Luftführung in einem Trockner zu steuern. Das Ausmaß, mit dem rückgeführte warme Abluft nochmals dazu verwendet werden kann, den feuchten Bogen zu trocknen, hängt vielmehr davon ab, wie stark die Abluft bereits mit Wasserdampf gesättigt ist. Deshalb schlägt die Erfindung vor, den Umluftanteil d. h. den Teil der Abluft, der zur Trocknerzuluft rückgeführt wird, oder anders ausgedrückt das Ausmaß der Zumischung der Trocknerabluft entsprechend der absoluten Feuchte der Abluft zu steuern oder zu regeln. Hierfür kann zweckmäßig eine oder mehrere vorzugsweise motorisch angetriebene Mischklappe(n) Verwendung finden, wie sie teilweise heute schon, meist jedoch ohne motorische Ansteuerung, vorhanden sind.

Die Steuer- oder Regeleinrichtung, die das Ausmaß der Zumischung der Trocknerabluft steuert, ist zusätzlich mit Sensoren zur Messung der Temperatur der Trocknerabluft verbunden, denn durch die gleichzeitige Messung von Temperatur und relativer Feuchte lässt sich die Menge des in der Abluft enthaltenen Wasserdampfs bestimmen. Entsprechende Kennlinien, anhand derer das Mischungsverhältnis dann gesteuert und geregelt wird, lassen sich in der Steuerung speichern.

Zusätzlich sind Sensoren vorzusehen, die auch die Luftfeuchte und/oder Temperatur der Trocknerzuluft messen. Denn die Menge der zugeführten Teilfeuchtenabluft mag insbesondere dann, wenn die Zuluft ungefiltert aus dem Drucksaal oder der Umgebung entnommen wird, auch davon abhängen, wie hoch die Luftfeuchte der Umgebung bereits ist. Die Steuerung/Regelung und damit der rückgeführte Umluftanteil der Trocknerabluft wird so gewählt, dass die Energieeffizienz hoch ist und sich dennoch die Trocknung aufgrund der noch vorhandenen Wasseraufnahmefähigkeit nicht wesentlich verschlechtert. Die Effizienz des Trocknungsvorgangs lässt sich beispielsweise in einem Mollier-Diagramm anhand des sogenannten Randmaßstabs bestimmen.

Es ist nicht erforderlich, die Mischklappe in der Mischeinrichtung stufenlos zu verstellen. Es genügt, wenn die Mischklappe in diskreten Stufen verstellbar ist, wobei das Ausgangssignal der Steuer- oder Regeleinrichtung durch Vergleich mit festen gespeicherten Schwellwerten beispielsweise als Signal mit treppenförmigem oder zur Ansteuerung von Schrittmotoren pulsförmigem Verlauf generierbar ist.

Die entsprechend der Erfindung aufgerüstete bogenverarbeitende Maschine z. B. Bogenoffsetdruckmaschine kann Trockner unterschiedlichen Typs besitzen, wobei z. B. die Abluft eines Trockners der Zuluft eines Trockners von einem anderen Typ zumischbar ist. Es ist jedoch auch in gleicher Weise möglich, die beschriebenen Maßnahmen bei einem Trockner des gleichen Typs oder bei demselben Trockner vorzunehmen.

Weitere Vorteile ergeben sich im Bezug auf die Energieeffizienz, wenn die Abwärme des nicht rückgeführten Teils der Trocknerabluft anderen, zusätzlichen Einrichtungen in der Maschine zugeführt wird, bei der die Abluft sinnvoll verwendet werden kann. Hierbei kann es sich beispielsweise um einen oder mehrere Wärmetauscher handeln, über die die nicht direkt der Trocknerzuluft zugeführten Teile der Trocknerabluft geführt werden. Für solche weiteren Verbesserungen der Energieeffizienz bedarf es in der Regel zusätzlicher Maßnahmen, wobei in der Regel der Aufwand steigt, je höher man den Grad bzw. das Ausmaß der Effizienz treiben möchte. In einem weiteren Schritt kann z. B. ein Wärmetauscher die Trocknerzuluft erwärmen vorzugsweise an einer Stelle, bevor die Trocknerabluft der Trocknerzuluft zugemischt wird. Dieser Wärmetauscher kann mit der nicht rückgeführten Abluft betrieben werden oder auch durch die Abwärme, die z. B. Bogenfiihrungselemente oder Druckzylinder im Bereich des Trockners produzieren. Mit der nicht rückgeführten Trocknerabluft könnten allerdings auch andere Bereich der bogenverarbeitenden Maschine mit Prozesswärme versorgt werden, beispielweise temperierbare Gegendruckzylinder, die dazu dienen den Druckbogen vor Eintritt in den jeweiligen Trocknerbereich vorzuerwärmen, wie das beispielsweise in der DE102007056899 A1 beschrieben ist, auf die an dieser Stelle vollumfänglich Bezug genommen wird.

Ganz besonders effizient wird die Trocknerabluft dann genutzt, wenn der nicht direkt rückgeführte Teil der Trocknerabluft und die Trocknerzuluft jeweils über zwei Wärmetauscher geführt sind, wobei der in Strömungsrichtung erste Wärmetauscher ein einfacher Luft-Luft-Wärmetauscher sein kann, während der in Strömungsrichtung jeweils folgende Wärmetauscher mit einem Kompressor verbunden ist, das die beiden in Strömungsrichtung folgenden Wärmetauscher im Bereich der Trocknerabluft und der Trocknerzuluft miteinander verbindet. Auf diese Weise kann die beispielsweise ins Freie geblasene Abluft bis in der Bereich der Umgebungsluft abgekühlt werden, während der Energieinhalt gleichzeitig nach dem Prinzip der Wärmepumpe über den Kompressor auf ein Temperaturniveau gehoben wird, von dem aus es nur noch sehr weniger elektrischer Energie durch die Heizregister bedarf, um die Luft auf die für das Trocknen erforderliche Temperatur zu bringen. Der Kompressor übernimmt dadurch die Aufgabe der Heizregister, allerdings mit einem sehr viel höheren Wirkungsgrad. Gleichzeitig wird durch die Abkühlung der feuchtwarmen Trocknerabluft der Taupunkt unterschritten, so dass es an dieser Stelle leicht möglich ist, Einrichtungen zum Entwässern und/oder zum Entfernen von Lösemitteln aus der Trocknerabluft anzuordnen. Die so entwässerte und/oder lösemittelfrei gemachte Abluft kann dann konsequenterweise über einen zweiten Kreislauf der Zuluft zugeführt werden bzw. es ergibt sich ein geschlossenes System ohne Emissionen.

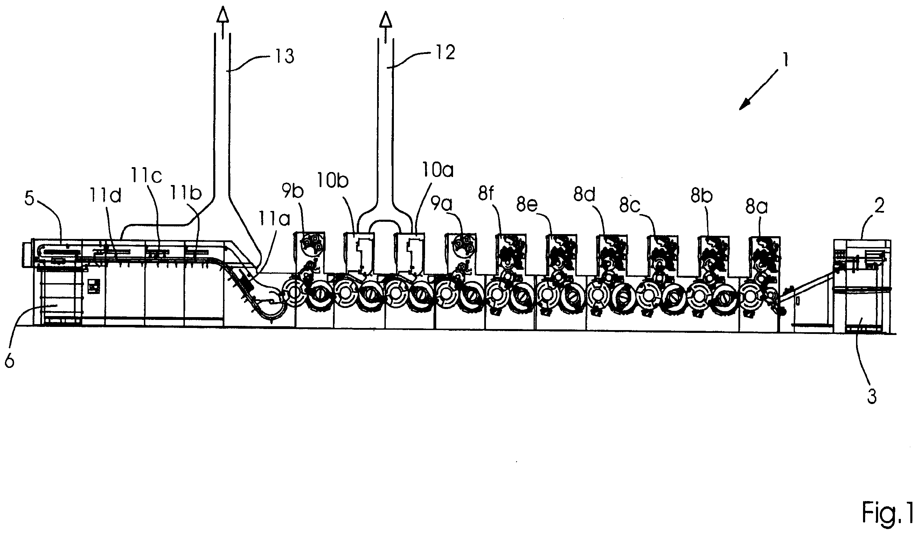

Weitere Vorteile der Erfindung ergeben sich aus den nachfolgenden Beschreibungen von Ausführungsbeispielen anhand der Figuren 1 bis 4 der beigefügten Zeichnungen.

Figur 1 zeigt eine Offsetdruckmaschine 1 in Reihenbauweise mit einem Anleger 2, in dem sich der unbedruckte Papierstapel 3 befindet, sechs Druckwerken 8a bis 8f für die vier Grundfarben und gegebenenfalls zwei weiteren Sonderfarben, einem ersten Lackierwerk 9a, darauf folgend zwei Trocknereinheiten 10a und 10b, einer zweiten Lackiereinheit 9b sowie einem Ausleger 5 mit dem Bogenauslagestapel 6. Im Bereich der Kettenführungen des Auslegers 5 sind vier weitere Trocknereinheiten 11a bis 11d in Bogentransportrichtung hintereinander angeordnet.

Eine derartige Druckmaschine wird beispielsweise unter der Bezeichnung Speedmaster XL105-6-LYYLX3 von der Heidelberger Druckmaschinen AG angeboten.

In die Trocknereinheiten 10a und 10b wird Zuluft eingeblasen, die anschließend durch Heizregister erwärmt wird. Oberhalb der Trocknereinrichtungen 10a und 10b ist ein Abluftkanal 12 dargestellt mit einem Gebläse, das die feuchtwarme Abluft aus der Trocknereinheit absaugt und über ein nicht näher dargestelltes Rohrleitungssystem aus dem Drucksaal heraus ins Freie führt.

Die Trockner 11a - 11d im Ausleger 5 der Druckmaschine 1 sind in Form von kassettenartigen Einschübenausgeführt. Bei diesen Trocknereinschüben kann es sich um Heißluftrockner, Infrarottrockner, UV-Trockner oder sogenannte Kombitrockner handeln, die sowohl mit Heißluft als auch mit Strahlungsenergie auf den zu trocknenden Bogen einwirken. Die Abluft der Trocknereinschübe 11 a-d wird ebenfalls wie in der Figur dargestellt über einen Abluftkanal 13 ins Freie geleitet.

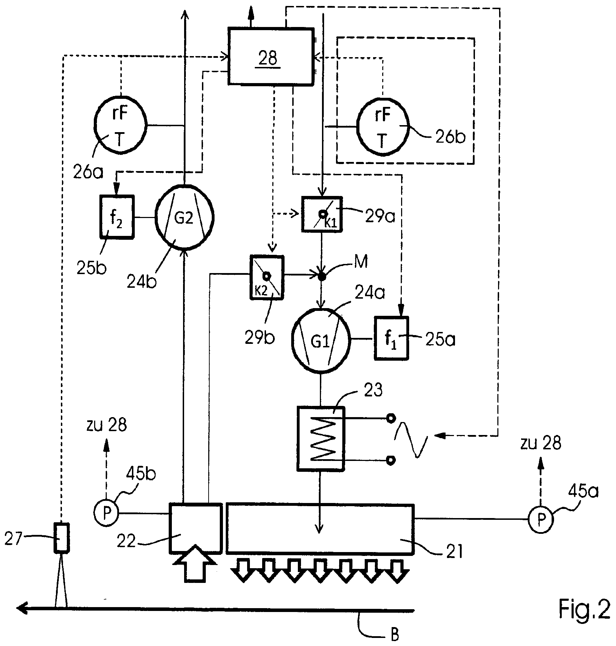

In einem ersten Ausführungsbeispiel wird die Erfindung anhand eines vereinfachten elektromechanischen Blockschaltbilds näher erläutert: In der Figur 2 ist mit 21 einer der Trocknereinschübe im Ausleger 5 bezeichnet. Er wird über ein Gebläse 24a und ein Heizregister 23 mit Heißluft versorgt, wobei das Gebläse 24a von einer Steuerung 28 bezüglich seiner Drehzahl entsprechend dem Druck p im Trockner 21 regelbar ist, den der Drucksensor 45a liefert. Im Zuluftkanal vor dem Gebläse 24a ist weiterhin eine erste Drosselklappe 29a angeordnet und zwar strömungstechnisch vor dem Punkt M, an dem über eine zweite Drosselklappe 29b ein Teil der erwärmten Abluft des Trockners 21 in die Zuluft eingespeist wird. Im Abluftkanal 22 ist eine Gebläse 24b angeordnet, dessen Antrieb 25b ebenfalls von der Steuerung 28 bezüglich seiner Drehzahl entsprechend dem Druck p geregelt ist, den ein zweiter Drucksensor 45b im Abluftkanal meldet. Weiterhin ist im Abluftkanal hinter dem Gebläse 24b eine Sensoreinheit 26a angebracht, die einen Feuchtesensor rF enthält sowie einen Temperatursensor T. Die Ausgangssignale beider Sensoren sind der Steuerung 28 zugeführt. Gleichfalls mit der Steuerung 28 verbunden ist ein weiterer kombinierter Feuchte- und Temperatursensor 26b im Zuluftkanal strömungsseitig vor der Drosselklappe 29a. Schließlich erhält die Steuerung 28 auch noch das Ausgangssignal eines IR-Thermosensors 27 zugeführt, der die Temperatur des aus dem Trockner auslaufenden Bogens B misst. Die Steuerung 28 berücksichtigt dieses Signal, um die elektrische Heizleistung des Heizregisters 23 so zu regeln, dass der Bogen B nicht überhitzt wird.

Weiterhin bestimmt die Steuerung 28 aus dem Signal des Feuchtesensors rF und des Temperatursensors T im Kombisensor 26a das Ausmaß, in dem die Abluft noch Feuchtigkeit aufnehmen kann. Im einfachsten Fall geschieht das durch Vergleich der gemessenen Feuchtewerte mit gespeicherten Werten bei jeweils einem bestimmten Temperaturwert. Vom Ergebnis des Vergleichs können dann von der Steuerung die Klappen 29a und 29b verstellt und somit das Mischungsverhältnis von Zuluft und Abluft geändert werden, die im Punkt M gemischt dem Gebläse 24a zugeführt werden. Eine Verbesserung der Regelstrategie erhält man, wenn zusätzlich wie in der Figur 2 dargestellt auch die Signale des zweiten Kombisensors 26b ausgewertet werden d. h. die relative Feuchte rF und die Temperatur T der Zuluft vor der Klappe K1 bestimmt wird. In diesem Falle vergleicht die Steuerung die Messwerte der beiden Kombisensoren26 a und b miteinander und regelt die Stellungen der Drosselklappen 29a und 29b gemäß der im Folgenden erläuterten Regelstrategie:
Kombinierte Infrarot/Heißlufttrockner verfügen über vier Einstellgrößen, die es zu optimieren gilt.
1. Die Leistung der Infrarotstrahler
2. Die Temperatur der Heißluft
3. Luftmenge (Blasluft), die auf den Bogen geblasen wird.
4. Der Anteil der Abluft, der wieder in den Trockner rückgeführt wird (Umluft).

Normalerweise wird die Leistung des Infrarotstrahlers und/oder die Heißlufttemperatur so geregelt, dass eine voreingestellte Bogen- bzw. Stapeltemperatur erreicht wird.

Desweiteren wird die Blasluftmenge möglichst hoch eingestellt aber zumindest gerade so hoch, dass der Bogenlauf durch den Luftstrom nicht negativ beeinflusst wird. Der Umluftanteil wird erfindungsgemäß jetzt ausgehend von einem voreingestellten Wert oder einem Standardwert so verändert, dass die spezifische eingesetzte Energie pro kg verdunstetem Lösemittel (Wasser) einen vorgegebenen Wert nicht überschreitet. Dieser Wert beschreibt die Effizienz des Trocknerprozesses. Ausgehend von Jobdaten kann der Wert rechnerisch ermittelt werden, indem sinnvolle Annahmen über die in die Rechnung eingehenden physikalischen Größen getroffen werden, wie anschließend erläutert.

Um ein kg Wasser zu verdunsten sind im Idealfall ca. 2.500 kJ notwendig. In dem realen technischen Druckprozess einer Bogenoffsetdruckmaschine liegen diese Werte häufig um das 5 - 10fache höher. Das hängt mit den Energieverlusten zusammen, aber vor allem auch daran, dass die zur Trocknung verwendeten Luftmassen wenig Wasserdampf aufnehmen können, weil die warme Abluft nach einmaligem Auftreffen auf den Druckbogen aus dem Prozess entfernt wird und durch neuerlich aufgeheizte Luft ersetzt wird. Die hohen Blasluftmengen, welche sich aus der Blasluftgeschwindigkeit und der Fläche des Blasluftfeldes ergeben, sind aber für eine gute Trocknung des Dispersionslackes während der relativ kurzen Zeit, zu der sich der Bogen im Trockner befindet, absolut notwendig. Jedoch erreicht nur ein kleiner Teil der eingeblasenen Luft die Oberfläche des Bogens und auch nur dieser Teil wird mit Lösungsmittel (Wasserdampf) abgesättigt. Der Teil des Luftstroms, der auf das Bogenleitblech oder Zylinder bzw. weitere Maschinenteile trifft, nimmt nämlich keinerlei Feuchtigkeit auf. In vielen Fällen ist dies die Hälfte oder mehr der eingesetzten Heißluftmenge abhängig vom Bogenformat des durchlaufenden Bogens.

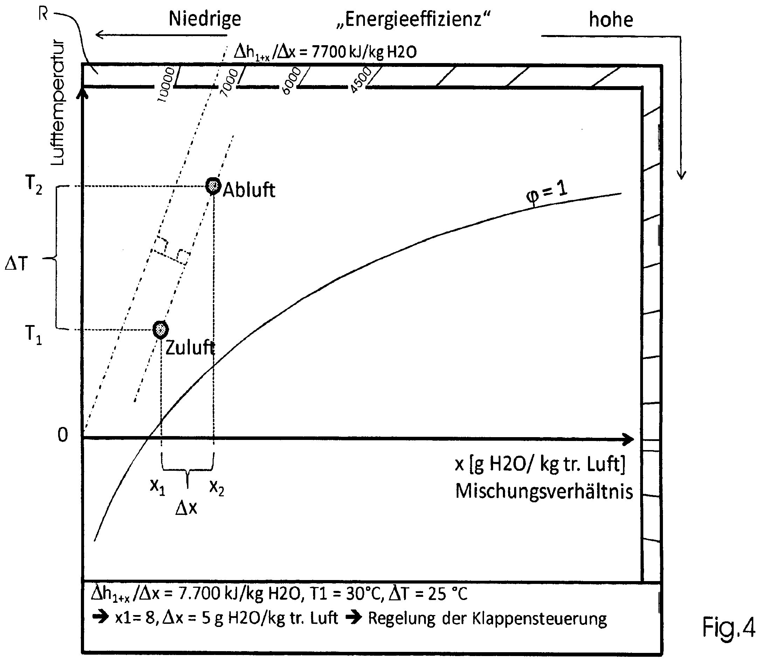

Über die psychrometrischen Zustandsgrößen der Zu- und Abluft lässt sich nun die Effizienz des Energieeinsatzes berechnen. Geometrisch bzw. zeichnerisch nachvollziehbar geschieht dies z. B. in einem Mollierdiagramm, das in Figur 4 dargestellt ist, über den dort mit R bezeichneten sogenannten "Randmaßstab". Im Randmaßstab eines Mollierdiagramms sind die Verdampfungsenthalpien z. B. in kJ/kg H₂O aufgetragen. Den für den Trocknungsprozess eingesetzten Wert erhält man, indem man den aus den Messwertpaaren T1, der Temperatur der Zuluft, und X1, der relativen Feuchte der Zuluft, gebildeten Punkt mit dem aus dem Messwertpaar T2, der Temperatur der Abluft, und der relativen Feuchte X2 der Abluft gebildeten Punkt durch eine Gerade verbindet und ihr im Diagramm eine Parallele zuordnet, die den Nullpunkt von Temperatur (0°C) und absoluter Feuchte schneidet. Der Wert, den diese Gerade dann auf dem Randmaßstab erreicht, ist ein Maß, für die im Trocknungsprozess eingesetzte Energie bzw. gibt an, wieviel Energie eingesetzt wurde, um eine bestimmte Menge Wasser aus dem Bedruckstoff zu verdampfen. Effizienter wird der Prozess, wenn mehr Wasserdampf bei gleicher oder niedrigerer Temperatur in der Abluft enthalten ist, d. h. wenn die Steigung der die Messwerte verbindenden Geraden geringer wird. Bei herkömmlichen Trocknern ergeben sich aus den Messwerten Verdampfungsenthalpien von über 10.000 kJ/kg, also weit über dem Vierfachen der theoretischen Verdampfungsenthalpie von 2.500 kJ/kg Wasser. Daran lässt sich ermessen, in welchem Ausmaße Optimierungen an dieser Stelle möglich sind.

Für das Bestimmen der Verdampfungsenthalpie lässt sich natürlich anstelle des geschilderten zeichnerischen Vorgehens im Mollierdiagramm die Verdampfungsenthalpie rechnerisch über die jeweilige Formel bestimmen und in der Steuerung 28 programmieren.

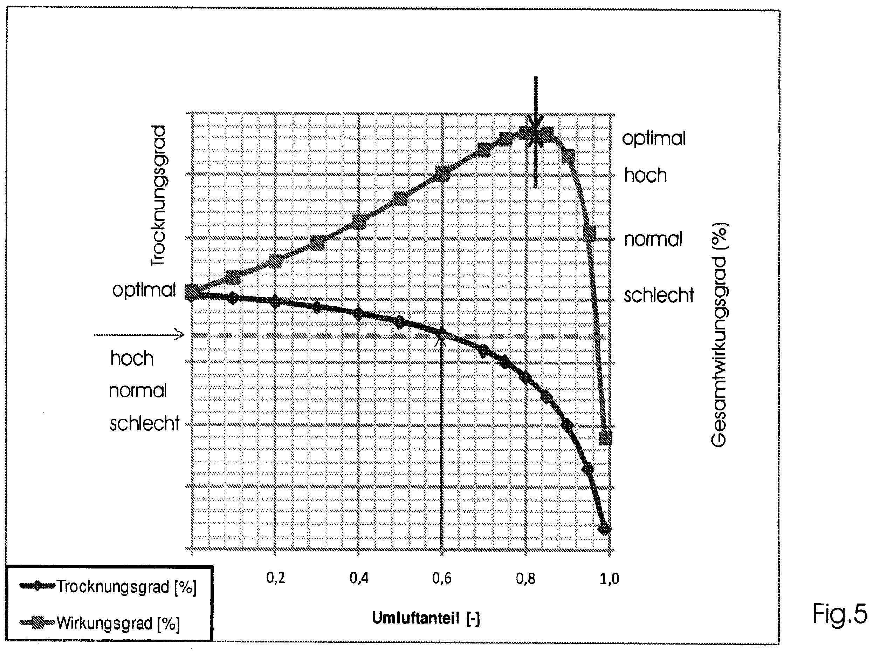

Es kann jedoch nun nicht über die immer höhere Zumischung von Abluft zur Zuluft der theoretische Wert von 2.500 kJ/kg Wasser erreicht werden, denn je mehr feuchte Abluft der Zuluft beigemischt wird, desto geringer wird auch der Trocknungsgrad des zu trocknenden Bogens. Dieser Zusammenhang ist in Figur 5 dargestellt. Dort sind in dem Diagramm links auf der Koordinate der Trocknungsgrad und rechts der Gesamtwirkungsgrad des Trockners aufgetragen und zwar beides abhängig vom prozentualen Umluftanteil. Die untere Kurve gibt den Trocknungsgrad an. Sie verläuft vom besten Wert bei einem Umluftanteil von 0 % d. h. bei geschlossener Umluftklappe monoton immer stärker fallend auf den Wert 0 bei 100 % d. h. vollständig geöffneter Umluftklappe zu. Hingegen hat die darüber aufgetragene Kurve für den Gesamtwirkungsgrad ein Maximum, im hier beschriebenen Beispiel bei etwa 80 % Öffnung der Umluftklappe und fällt danach ebenfalls rasch auf 0 (letzteres entspricht dem Fall, dass die Umluftklappe vollständig geöffnet wird d. h. keine Luft mehr aus dem Trockner entfernt und keine Frischluft mehr zugeführt wird, was zwar keine Energie verbraucht, aber auch den Bogen nicht mehr trocknet).

Der Verlauf beider Kurven ist von sehr vielen Parametern abhängig, wobei die dort dargestellten Stützpunkte zum einen aus Feuchte- und Temperaturmessungen in der Abluft bzw. Zuluft des Trockners sowie am getrockneten Bogen bestimmt werden können, andererseits aber auch anhand der Parameter eines Druckjobs bestimmt werden können. Diese Kennlinien sind u. a. abhängig vom Bogenformat, dem Lackauftrag auf dem Bogen, der Infrarotleistung der Strahler in dem kombinierten IR-/Heißlufttrockner, der Maschinengeschwindigkeit und der Farbbelegung des bedruckten Bogens, um nur einige der wichtigsten Parameter zu nennen. Prinzipiell ist es deshalb auch möglich, anstatt der vorstehend beschriebenen Feuchtemessungen die Kennlinien für Wirkungsgrad und Trocknungsgrad aus diesen Parametern zu bestimmen. Die Bedienperson hätte es dann in der Hand, wie durch den Pfeil bei 60 % Umluftanteil angedeutet, eine leichte Einbuße beim Trocknungsgrad hinzunehmen, dafür aber den Wirkungsgrad des Trockners um ca. 50 % zu erhöhen und damit die erforderliche elektrische Leistung entsprechend zu senken.

Die Steuerung 28 kann aber auch für verschiedene Betriebsarten eingerichtet werden. Für unkritische Druckjobs, bei denen beispielsweise wenig Lack bzw. schnell vernetzender Lack aufgetragen wird, kann der Umluftanteil sehr hoch sein (Energiesparmodus). Dagegen stellt der Bediener bei kritischen Druckjobs den Umluftanteil niedriger ein, d. h. er wählt den Energiesparmodus ab oder stuft ihn um eine oder mehrere Stufen zurück. Des Weiteren kann in der Steuerung hinterlegt werden, dass bei höher eingestellten Blaslufttemperaturen auch größere Luftmengenanteile in Umluft gefahren werden können (beispielsweise bei Temperaturen T > 70°C) als bei sehr moderaten Lufttemperaturen von z. B. T < 60°C. Auch diese Zusammenhänge lassen sich aus dem in Figur 4 dargestellten Mollierdiagramm ableiten.

Generell sorgt die Steuerung 28 also dafür, dass die Energieeffizienz des Trockners möglichst hoch ist aber sich die Trocknung nicht wesentlich verschlechtert, indem die über die Klappen 29a und 29b gebildete Mischung von Frischluft und Abluft noch eine ausreichend hohe Aufnahmefähigkeit für Wasser besitzt.

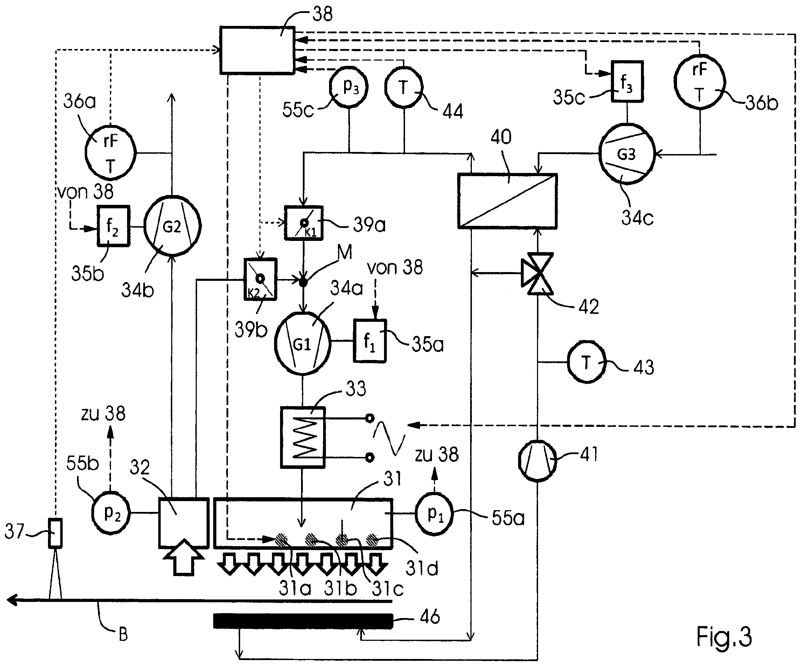

Das Ausführungsbeispiel nach Figur 3 unterscheidet sich von dem nach Figur 2 im Wesentlichen dadurch, dass im Zuluftkanal ein zusätzlicher Luft/Wasserwärmetauscher 40 vorgesehen ist, durch den die Zuluft mittels eines weiteren Gebläses 34c hindurchgedrückt wird. Ansonsten sind im Vergleich zu Figur 2 gleiche Teile mit einer um 10 höheren Bezugsziffer bezeichnet und werden an dieser Stelle nicht nochmals erläutert. Der Trocknereinschub 31 ist in diesem Falle ein sogenannter Kombinationstrockner, dem sowohl Heißluft über das Gebläse 34 und das Heizregister 33 zugeführt wird, der aber außerdem vier Infrarotheizstrahler 31 a bis d enthält, von denen der durchlaufende Bogen B bestrahlt wird. Mit 46 ist ein gekühltes Bogenleitblech bezeichnet, über dem bzw. über dem der Bogen B von hier nicht näher dargestellten über Transportketten angetriebenen Greiferleisten durch Luftpolster geführt berührungslos hinweg gezogen wird. Das Leitblech 46 heizt sich im Trockner sowohl durch die Heißluft als aber auch über die IR-Strahler 31 a bis d auf, wird aber durch Wasser gekühlt, das von einer Pumpe 41 über ein Mischventil 42 mit dem Wärmetauscher 40 verbunden ist. Des Weiteren ist ein zusätzlicher Temperatursensor 44 in der Zuluft hinter dem Wärmetauscher 40 angeordnet, dessen Signal ebenfalls der Steuerung 38 zugeführt wird.

An der absoluten Luftfeuchte der Zuluft nach Durchtritt durch den Wärmetauscher 40 ändert sich nichts, so dass die Feuchtewerte des Kombisensors 26b für die Zuluft weiterhin für die Zuluft auch an dieser Stelle hinter dem Wärmetauscher Gültigkeit haben. Hingegen ändert sich die Temperatur nach Durchtritt durch den Wärmetauscher 40, der die Zuluft vor der Drosselklappe 39 auf ein höheres Niveau hebt. Entsprechend kann die elektrische Energie für das Heizregister 33 verringert werden, da die Zuluft bereits mit einer deutlich höheren Temperatur in das Heizregister 33 eintritt als im Falle des Ausführungsbeispiels nach Figur 2.

Mit den beschriebenen Maßnahmen lässt sich der Energiebedarf eines Trockners von typisch 100 kW in vollem Betrieb d. h. bei einer Maschinengeschwindigkeit von 16.000 Bögen pro Stunde im Format 75 x 105 um etwa 20 - 30 kW reduzieren, wobei etwa gleichermaßen 10 - 15 kW auf die geregelte Rückführung der Abluft und auf den Einsatz des Wärmetauschers 40 entfallen. Das Bogenleitblech 46 bzw. die Bogenleitbleche im Bereich des Trockners 31 sind geschwärzt, um auf diese Weise die Absorptionseigenschaften der Leitblechoberfläche zu verbessern und die Effektivität der zusätzlichen Zulufterwärmung zu erhöhen.

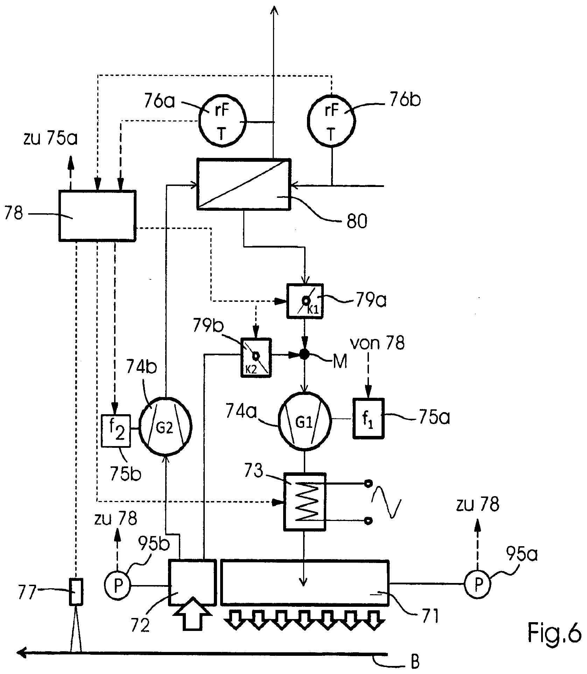

Eine weitere Reduzierung der Trocknerleistung um ca. 10 kW ist möglich, dadurch dass die zu trocknenden Bögen vorerwärmt werden, indem Prozesswärme aus der Abluft auf temperierbare Gegendruckzylinder übertragen wird oder dadurch, dass die nicht zurückgeführte Abluft einen Teil ihres Wärmeinhalts über einen Luft/Luft-Wärmetauscher an die Frischluft überträgt. Dieser Fall ist in der Skizze nach Figur 6 dargestellt. Das Ausführungsbeispiel nach Figur 6 entspricht in vielen Funktionen dem nach Figur 2. Gleiche Teile sind gegenüber der Figur 2 mit einer um 50 höheren Bezugszahl versehen und werden deshalb hier nicht nochmals beschrieben.

Im Unterschied zu Figur 2 ist jedoch im Abluftkanal zwischen dem Gebläse 74b und der Messstelle 76a ein Luft/Luft-Wärmetauscher 80 eingefügt. Solche Wärmetauscher bietet beispielsweise die Fa. Klingenburg in Gladbeck, Deutschland, unter der Bezeichnung PWT10 an. Der Wärmetauscher wird vorzugsweise zwischen den Seitenwänden der Druckmaschine untergebracht und kann in ähnlicher Weise wie die Trockner 11a-d (Figur 1) in Form eines Einschubs ausgebildet sein, der z. B. zu Reinigungszwecken aus der entsprechenden Öffnung in der Seitenwand der Maschine herausnehmbar ist.

Die der Drosselklappe 79 zugeführte Frischluft wird nach Passieren der Messstelle 76b ebenfalls über den Wärmetauscher 80 geführt und nimmt dort einen großen Teil der in der Abluft enthaltenen Wärme auf. Entsprechend niedriger, wie oben ausgeführt, ist die Heizleistung, die das Heizregister 73 zur Verfügung stellen muss.

### Bezugszeichenliste

- 1: Druckmaschine
- 2: Anleger/Gebläse
- 3: Papierstapel
- 5: Ausleger
- 6: Bogenauslagestapel
- 8a-f: Druckwerk
- 9a, b: Lackiereinheit
- 10a, b: Trocknereinheit
- 11a-d: Trocknereinheit
- 12: Abluftkanal
- 13: Abluftkanal
- 21, 71: Trocknereinschub
- 22, 72: Abluftkanal
- 23, 73: Heizregister
- 24a, b; 74a, b: Gebläse
- 25a, b; 75a, b: Antrieb Gebläse
- 26a, b; 76a, b: Sensoreinheit
- 27, 77: Infrarotsensor
- 28, 78: Regeleinrichtung/Steuerung
- 29a, b; 79a, b: Drosselklappe
- 31: Trocknereinschub
- 31a-d: Infrarotheizstrahler
- 32: Abluftkanal
- 33: Heizregister
- 34a, b, c: Gebläse
- 35a, b, c: Antrieb
- 36a, b: Sensoreinheit
- 37: Infrarotsensor
- 38: Regeleinrichtung
- 39a, b: Drosselklappe
- 40: Luft/Wasserwärmetauscher
- 41: Pumpe
- 42: Mischventil
- 44: Temperatursensor
- 45a,b; 95a, b: Druckmessstellen
- 46: gekühltes Bogenleitblech
- 55a, b, c: Druckmessstellen
- 80: Luft/Luft-Wärmetauscher

- B: durchlaufender Bogen
- rF: relative Feuchte
- T: Temperatur
- M: Mischpunkt
- p: Druck
- R: Randmaßstab

## Patentansprüche

1. Bogenverarbeitende Maschine, insbesondere Bogendruckmaschine mit einem oder mehreren Trocknern (10a, b; 11a-d; 21; 31), Luftzuführungseinrichtungen für die Trockner, mindestens einer Luftabführungseinrichtung (12; 13) für die erwärmte Abluft, einer Mischeinrichtung (29a, b; 39a, b) für das Zumischen von warmer Trocknerabluft zur Trocknerzuluft sowie eine Steuer- oder Regeleinrichtung (28; 38), die das Ausmaß der Zumischung der Trocknerabluft zur Trocknerzuluft anhand von Messgrößen oder Einstellwerten steuert oder regelt, die mit dem Feuchtegehalt der Abluft korreliert sind, wobei die Steuer- oder Regeleinrichtung (28; 38) mit Sensoren zur Messung der Feuchte (rF) der Trocknerabluft verbunden ist und die Steuerung das Ausmaß der zugemischten Trocknerabluft anhand von Messwerten und/oder Kennlinien bestimmt, die die Dampfsättigung bzw. Feuchteaufnahmefähigkeit der Abluft beschreiben,
**dadurch gekennzeichnet,**
**dass** die Steuer- oder Regeleinrichtung (28; 38) zusätzlich mit Sensoren zur Messung der Temperatur (T) der Trocknerabluft verbunden ist, und dass zusätzlich Sensoren (26b; 36b) mit der Steuer- oder Regeleinrichtung (28; 38) verbunden sind, die die Luftfeuchte (rF) und/oder Temperatur (T) der Trocknerzuluft messen.

2. Bogenverarbeitende Maschine nach Anspruch 1,
wobei die Mischeinrichtung eine oder mehrere motorisch angetriebene und von der Steuer- oder Regeleinrichtung (28; 38) betätigbare Mischklappe(n) (29a, b; 39a, b) enthält.

3. Bogenverarbeitende Maschine nach einem der Ansprüche 1 oder 2,
wobei die Mischklappe(n) (29a, b; 39a, b) in diskreten Stufen verstellbar ist/ sind und das Ausgangssignal der Steuer- oder Regeleinrichtung (28; 38) direkt oder indirekt durch Vergleich mit gespeicherten Schwellwerten generierbar ist.

4. Bogenverarbeitende Maschine nach einem der Ansprüche 1 bis 3,
wobei die bogenverarbeitende Maschine Trockner (10a, b; 11a-d; 21; 31; 101) unterschiedlichen Typs besitzt und die Abluft mindestens eines Trockners der Zuluft eines oder mehrerer Trockner des gleichen Typs und/oder eines verschiedenen Typs oder der Zuluft des gleichen Trockners (21; 31) zumischbar ist.

5. Bogenverarbeitende Maschine nach einem der Ansprüche 1 bis 4,
wobei die bogenverarbeitende Maschine weiterhin Einrichtungen (80) zur weiteren Nutzung der Abwärme des nicht direkt der Trocknerzuluft zugeführten Teils der Trocknerabluft enthält.

6. Bogenverarbeitende Maschine nach Anspruch 5,
wobei es sich bei den Einrichtungen um einen oder mehrere Wärmetauscher (80) oder Wärmepumpen handelt.

7. Bogenverarbeitende Maschine nach Anspruch 6,
wobei der Wärmetauscher (80) oder die Wärmepumpen die Trocknerzuluft erwärmen, vorzugsweise an einer Stelle bevor die Trocknerabluft der Trocknerzuluft zugemischt wird.

8. Bogenverarbeitende Maschine nach einem der Ansprüche 1 bis 4,
wobei die bogenverarbeitende Maschine einen Wärmetauscher (40) enthält, dem die Abwärme der Bogenführungselemente (46) im Bereich der/des Trockner(s) (31) zugeführt ist.

9. Bogenverarbeitende Maschine nach Anspruch 8,
wobei über den Wärmetauscher (40) die Trocknerzuluft erwärmt wird und/oder andere Komponenten der bogenverarbeitenden Maschine (1) mit Prozesswärme versorgt werden.

10. Verfahren zur Trocknung von bedruckten und/oder lackierten Bögen in einer bogenverarbeitenden Maschine mit einer Einrichtung für das Zumischen von warmer Trocknerabluft zur Trocknerzuluft,
wobei das Ausmaß der Zumischung der Trocknerabluft zur Trocknerzuluft anhand von Messgrößen oder Einstellwerten über eine Steuer- oder Regeleinrichtung erfolgt, die mit dem Feuchtegehalt der Trocknerabluft korreliert sind,
**dadurch gekennzeichnet,**
**dass** es sich bei den Messgrößen um relative Feuchtemesswerte und Temperaturmesswerte der Trocknerabluft sowie zusätzlich um relative Feuchtemesswerte und Temperaturwerte der Trocknerzuluft handelt, und dass die Einstellwerte aus einem oder mehreren der folgenden Parametern berechnet sind: Bogenformat, Lackauftrag, Infrarotleistung der Trocknerstrahlung, Heizluft des Heizregisters, Maschinengeschwindigkeit, Farbbelegung des bedruckten Bogens.

## Claims

1. Sheet-processing machine, in particular a sheet-fed printing press (1), comprising one or more dryers (10a, b; 11a-d; 21; 31), air feed devices for the dryers, at least one air extraction device (12, 13) for the heated dryer exhaust air, and mixing device (29a, b; 39a, b) for mixing the heated dryer exhaust air with the dryer feed air, as well as a control device (28; 39), potentially a closed-loop control device (28; 38), for controlling the admixture of the dryer exhaust air to the dryer feed air based on measurement values or set values, said values correlated with the moisture content of the exhaust air, wherein the control device (28; 39) is connected to sensors for measuring the humidity (rF) of the dryer exhaust air and the control device determines the amount of admixed dryer exhaust air on the basis of measured values and/or characteristic lines describing the vapour saturation/moisture absorption capacity of the exhaust air,
**characterized**
**in that** the control device (28; 39) is additionally connected to sensors for measuring the temperature (T) of the dryer exhaust air and in that additionally sensors (26b; 36b) measuring the air humidity (rF) and/or temperature (T) of the dryer feed air are connected to the control device (28;38).

2. Sheet-processing machine according to claim 1,
wherein the mixing device includes one or more motor-driven mixing valve(s) (29a, b; 39a) actuatable by the control device (28; 38).

3. Sheet-processing machine according to any one of claims 1 or 2,
wherein the mixing valve(s) (29a, b; 39a, b) is/are adjustable in discrete steps and
wherein the output signal of the control device (28; 38) is generatable directly or indirectly by comparison with stored threshold values.

4. Sheet-processing machine according to any one of claims 1 to 3,
wherein the sheet-processing machine comprises dryers (10a, b; 11a-d; 21; 31; 101) of different types, and wherein the exhaust air from at least one of the dryers is admixable to the feed air of one or more of the dryers of the same type and/or of a different type or to the feed air of the same dryer (21; 31).

5. Sheet-processing machine according to any one of claims 1 to 4,
wherein the sheet-processing machine further comprises devices (80) for further use of the waste heat of that part of the dryer exhaust air that is not being fed directly to the dryer feed air.

6. Sheet-processing machine according to claim 5,
wherein the devices include one or more heat exchangers (80) or heat pumps.

7. Sheet-processing machine according to claim 6,
wherein the heat exchanger (80) or the heat pumps heat the dryer feed air, preferably in a location upstream of where the dryer exhaust air is admixed to the dryer feed air.

8. Sheet-processing machine according to any one of claims 1 to 4,
wherein the sheet-processing machine includes a heat exchanger (40) that the waste heat of the sheet-guiding elements (46) is fed to in the region of the dryer(s) (31).

9. Sheet-processing machine according to claim 8,
wherein the heat exchanger (40) heats the dryer feed air and/or supplies other components of the sheet-processing machine (1) with process heat.

10. Method for drying printed and/or varnished sheets in a sheet-processing machine comprising a device for admixing heated dryer exhaust air with the dryer feed air,
wherein the extent of admixing of the dryer exhaust air to the dryer exhaust air is done by a control device, potentially a closed-loop control device, based on measured values or setting values correlated with a moisture content of the dryer exhaust air,
**characterized**
**in that** the measured values are measured values of the relative humidity and measured temperature values of the exhaust air and additionally measured values of the relative humidity and temperature values of the dryer feed air,
and **in that** the setting values are calculated from one or more of the following parameters: sheet format, application of varnish, infrared output of dryer radiation, hot air from a heating matrix, machine speed, or ink coverage of the printed sheet.

## Revendications

1. Machine de traitement de feuilles, en particulier machine d'impression de feuilles (1) avec un ou plusieurs sécheurs (10a, b ; 11a-d ; 21 ; 31),
des dispositifs d'alimentation d'air pour les sécheurs, au moins un dispositif d'évacuation d'air (12 ; 13) pour l'air évacué chauffé et un dispositif de mélange (29a, b ; 39a, b) pour le mélange d'air évacué chaud du sécheur à l'air amené au sécheur ainsi qu'un dispositif de commande ou de réglage (28 ; 38), qui contrôle ou régule la quantité de mélange de l'air évacué du sécheur et de l'air amené au sécheur à l'aide de grandeurs de mesure ou de valeurs de réglage, en corrélation avec la teneur en humidité de l'air évacué, le dispositif de commande ou de réglage (28 ; 38) étant relié à des capteurs de mesure de l'humidité (rF) de l'air évacué du sécheur et la commande déterminant l'ampleur de l'air évacué mélangé du sécheur à l'aide de valeurs de mesure et/ou de courbes caractéristiques, qui décrivent la saturation de la vapeur respectivement la capacité d'absorption de l'humidité de l'air évacué,
**caractérisée en ce**
**que** le dispositif de commande ou de régulation (28 ; 38) est relié en plus à des capteurs pour mesurer la température (T) de l'air évacué du sécheur, et que des capteurs supplémentaires (26b ; 36b) sont reliés au dispositif de commande ou de réglage (28 ; 38) qui mesurent l'humidité de l'air (rF) et/ou la température (T) de l'air amené au sécheur.

2. Machine de traitement de feuilles selon la revendication 1,
le dispositif de mélange comprenant un ou plusieurs clapets de mélange (29a, b ; 39a,b) entraînés par un moteur et commandés par le dispositif de commande ou de régulation (28 ;38).

3. Machine de traitement de feuilles selon l'une des revendications 1 ou 2,
le(s) clapet (s) de mélange (29a, b ; 39a, b) étant réglable(s) par niveaux discrets et le signal de sortie du dispositif de commande ou de réglage (28 ; 38) pouvant être généré directement ou indirectement par comparaison avec des valeurs seuils stockées.

4. Machine de traitement de feuilles selon l'une des revendications 1 à 3,
la machine de traitement de feuilles présentant des sécheurs (10a, b ; 11a-d; 21; 31; 101) de différents types et l'air évacué d'au moins un sécheur pouvant être mélangé à l'air amené d'un ou de plusieurs sécheurs de même type et/ou d'un type différent ou à l'air amené au même sécheur (21 ; 31).

5. Machine de traitement de feuilles selon l'une des revendications 1 à 4,
la machine de traitement de feuilles comprenant en outre des dispositifs (80) pour une utilisation ultérieure de la chaleur perdue de la partie de l'air évacué du sécheur qui n'est pas amenée directement à l'air amené au sécheur.

6. Machine de traitement de feuilles selon la revendication 5,
les dispositifs étant un ou plusieurs échangeurs de chaleur (80) ou des pompes à chaleur.

7. Machine de traitement de feuilles selon la revendication 6,
l'échangeur de chaleur (80) ou les pompes à chaleur chauffant l'air amené au sécheur, de préférence à un endroit avant que l'air évacué du sécheur soit mélangé à l'air amené au sécheur.

8. Machine de traitement de feuilles selon l'une des revendications 1 à 4,
la machine de traitement de feuilles comprenant un échangeur de chaleur (40), auquel est amenée la chaleur perdue des éléments de guidage de feuille (46) dans la zone du/des sécheur(s) (31).

9. Machine de traitement de feuilles selon la revendication 8,
l'air amené au sécheur étant chauffé par l'intermédiaire de l'échangeur de chaleur (40) et/ou d'autres composants de la machine de traitement de feuilles (1) étant alimentés en chaleur de processus.

10. Procédé de séchage de feuilles imprimées et/ou vernies dans une machine de traitement de feuilles avec un dispositif pour le mélange d'air évacué chaud du sécheur et d'air amené au sécheur, la quantité de mélange de l'air amené au sécheur et de l'air évacué du sécheur s'effectuant par un dispositif de commande ou de réglage à l'aide de grandeurs de mesure ou de valeurs de réglage qui sont corrélées à la teneur en humidité de l'air évacué du sécheur,
**caractérisé en ce**
**que** les grandeurs de mesure sont des valeurs de mesure d'humidité et de valeurs de mesure de température relatives de l'air évacué du sécheur et en plus des valeurs de mesure d'humidité et de valeurs de mesure de température relatives de l'air amené au sécheur, et que les valeurs de réglage sont calculées à partir d'un ou de plusieurs des paramètres suivants : format de la feuille, couche de vernis, puissance du rayonnement infrarouge du sécheur, air chaud du registre de chauffage, vitesse de la machine moteur, emplacement de l'encre de la feuille imprimée.
